# EUROPEAN PATENT APPLICATION

(11) **EP 2 675 210 A1**
(43) Date of publication of application: **18.12.2013**
(21) Application number: 11858391.3
(22) Date of filing: 19.12.2011
(51) Int. Cl.: H04W 28/04, H04L 1/16, H04W 16/12, H04W 80/08

(54) **WIRELESS COMMUNICATION SYSTEM, WIRELESS COMMUNICATION METHOD, WIRELESS COMMUNICATION DEVICE AND CONTROL METHOD FOR SAME, AS WELL AS STORAGE MEDIUM STORING CONTROL PROGRAM FOR SAME**

(30) Priority: 07.02.2011 JP 2011023755
(71) Applicant: NEC Corporation, Tokyo 108-8001 (JP)
(72) Inventor: TAKAGI Kenki, Tokyo 108-8001 (JP)
(74) Representative: Betten & Resch
(86) International application number: PCT/JP2011/079389
(87) International publication number: WO 2012/108105

(57) **Abstract**

The system of the present invention includes a first radio station and a plurality of second radio stations that communicate via a limited radio resource having a limited time slot and a limited frequency band allocated in advance. The first radio station performs control not to request the plurality of second radio stations to re-transmit transmission data when detecting a receive error in the transmission data from the plurality of second radio stations to the first radio station. Each of the plurality of second radio stations performs control, when detecting a receive error in transmission data from the first radio station to the second radio station, not to request the first radio station to re-transmit the transmission data in which the receive error has been detected, but to receive the transmission data re-transmitted according to a upper layer protocol from a communication partner radio station with which communication on the upper layer has already been established.

## Description

### TECHNICAL FIELD

The present invention relates to a radio communication technique that employs a limited radio resource

### BACKGROUND ART

Nowadays, in advanced countries, the subscriber penetration rate of mobile telephone networks has reached 90% or more of the total population. And in some advanced countries the penetration ratio has reached nearly 120%, so that diffusion to general users is already at saturation level. Furthermore, from now, there is also a steadily increasing tendency towards a communication situation in which communication devices of different types and communication resources of different types are present alongside one another. Corresponding to this type of change of communication environment, for example in Patent Document #1, access point processing is disclosed in which frequency bands are automatically changed over in a wireless LAN method, in order to support a plurality of communication formats that use different frequency bands. Moreover in Patent Document #2 it is described, in order as much as possible to avoid collisions during packet communication due to change of the radio environment, to perform re-transmission with a changed transmission interval, if no ACK signal has been received within a predetermined time period after packet transmission.

### CITATION LIST

### PATENT LITERATURE

Patent Document #1: Japanese Laid-Open Patent Publication 2003-087856.
Patent Document #2: Japanese Laid-Open Patent Publication 2005-072658.

### SUMMARY OF THE INVENTION

### TECHNICAL PROBLEM

However, as explained below, the techniques described in the above Patent Documents are not capable of sufficiently supporting communication between machines (M2M: Machine to Machine) in which communication is performed between one machine and another, which is nowadays receiving great attention. In order to increase mobile telephone service business turnover, it is necessary to increase the number of subscribers, and so great attention is being given to this M2M market for new subscribers. Automatic vending machines, automobiles (car navigation systems), traffic signal devices, machine tools, sensors of various types, and so on are included in the types of machines that are being considered in this case. In particular LTE (Long Term Evolution), which is attracting attention as a next generation radio network, is also considered as being an effective network for M2M communication as well, because its efficiency of radio utilization is high.

It is predicted that in the future the number of these machine radio stations will become equal to the number of general users, or even greater. In particular, it is supposed that increase in the number of machine radio stations located in urban areas will be significant. Due to this, there is a possibility that the number of machine radio stations present in the service area of a radio base station may increase abruptly, and that it may become impossible to perform radio base station processing with the performance that in the past has been accorded to general users. As a result, in order to process the increased number of machine radio stations, it is becoming necessary to augment the number of radio base stations. Here, a fact that must be given close attention is that the communication charge that each communication business levies upon one machine radio station is extremely low as compared to the communication charge that is levied upon one general user, being from a fraction to one tenth thereof. Due to this, if increase of the number of facilities is performed while considering increase in the number of machine radio stations and increase in the number of general users as being the same, there is a possibility that it may not be possible to obtain an increase in sales commensurate with the augmented facilities, and that the ROA (Revenue Over Assets) may be deteriorated. Due to this, when the number of machine radio stations increases, measures are required to simplify the data processing in the radio base stations as much as possible, and to keep down increase of the facilities in the radio base stations, or at least to delay the timing of increase of such facilities.

The object of the present invention is to provide a technique that solves the problems described above.

### MEANS FOR SOLUTION

In order to attain the object described above, the system according to the present invention is a radio communication system that performs communication using a limited radio resource, comprising a first radio station and a plurality of second radio stations that communicate via said limited radio resource having a limited time slot and a limited frequency band allocated in advance, the first radio station comprising a first control unit that performs control not to request the plurality of second radio stations to re-transmit transmission data when detecting a receive error in the transmission data from the plurality of second radio stations to the first radio station, and each of the plurality of second radio stations comprising a second control unit that performs control, when detecting a receive error in transmission data from the first radio station to the second radio station, not to request the first radio station to re-transmit the transmission data in which the receive error has been detected, but to receive the transmission data re-transmitted according to a upper layer protocol from a communication partner radio station with which communication on the upper layer has already been established.

And, in order to attain the object described above, the method according to the present invention is a radio communication method of communicating a first radio station and a second radio station using a limited radio resource, comprising: the first radio station transmitting an acknowledgement message to the second radio station when correctly receiving transmission data from the second radio station to the first radio station; the first radio station not requesting the second radio station to re-transmit the transmission data, when detecting a receive error in the transmission data from the second radio station to the first radio station; the second radio station re-transmitting the transmission data to the first radio station when receiving no acknowledgement message from first radio station within a predetermined period in data transmission from the second radio station to the first radio station; and the second radio station not requesting the first radio station to re-transmit transmission data in which the receive error has been detected, even if when detecting a receive error in the transmission data from the first radio station to the second radio station, but receiving the transmission data re-transmitted according to a upper layer protocol from a communication partner radio station with which communication on the upper layer has already been established.

And, in order to attain the object described above, the device according to the present invention is a radio communication device that performs communication using a limited radio resource with being controlled by a radio base station, said device comprising: a transmission unit that re-transmits transmission data when receiving no acknowledgement message from the radio base station within a predetermined period, the acknowledgement message confirming that the transmission data has been correctly received by said radio base station, in data transmission to the radio base station; a detection unit that detects a receive error in data received from the radio base station; and a reception unit that performs control, , when a receive error has been detected by said detection means, not to request the radio base station to re-transmit the data in which the receive error detected, but to receive the data in which the receive error detected re-transmitted according to a upper layer protocol from a communication partner radio station with which communication on the upper layer has already been established.

And, in order to attain the object described above, the method according to the present invention is a method of controlling a radio communication device that performs communication using a limited radio resource with being controlled by a radio base station, said method comprising: re-transmitting transmission data when receiving no acknowledgement message from the radio base station within a predetermined period, the acknowledgement message confirming that the transmission data has been correctly received by said radio base station, in data transmission to the radio base station; detecting a receive error in data received from the radio base station; and performing control, when a receive error has been detected by said detection means, not to request the radio base station to re-transmit the data in which the receive error detected, but to receive the data in which the receive error detected re-transmitted according to a upper layer protocol from a communication partner radio station with which communication on the upper layer has already been established.

And, in order to attain the object described above, the storage medium according to the present invention is a storage medium that stores a program for controlling a radio communication device that performs communication using a limited radio resource with being controlled by a radio base station, said program that causes a computer to execute the step of: re-transmitting transmission data when receiving no acknowledgement message from the radio base station within a predetermined period, the acknowledgement message confirming that the transmission data has been correctly received by said radio base station, in data transmission to the radio base station; detecting a receive error in data received from the radio base station; and performing control, when a receive error has been detected by said detection means, not to request the radio base station to re-transmit the data in which the receive error detected, but to receive the data in which the receive error detected re-transmitted according to a upper layer protocol from a communication partner radio station with which communication on the upper layer has already been established.

### ADVANTAGEOUS EFFECT OF THE INVENTION

According to the present invention, along with limiting the radio resources that are allocated to the second radio stations, it is also possible to simplify the data processing in the first radio station for the relationship with the second radio stations as much as possible, and thus it is possible to reduce the load upon the first radio station due to increase in the number of the second radio stations.

### BRIEF DESCRIPTION OF THE DRAWINGS

Fig. 1 is a block diagram showing the structure of a radio communication system according to a first embodiment of the present invention;
Fig. 2 is a block diagram showing the structure of a radio communication system according to a second embodiment of the present invention;
Fig. 3 is a figure for explanation of resource block allocation, according to the second embodiment of the present invention;
Fig. 4 is a transition diagram showing data transmission processing from a radio base station to a machine radio station, in the radio communication system according to the second embodiment of the present invention;
Fig. 5 is a sequence diagram showing this processing for data transmission from the radio base station to the machine radio station, in the radio communication system according to the second embodiment of the present invention;
Fig. 6 is a transition diagram showing processing for data transmission from the machine radio station to the radio base station, in the radio communication system according to the second embodiment of the present invention;
Fig. 7 is a sequence diagram showing this processing for data transmission from the machine radio station to the radio base station, in the radio communication system according to the second embodiment of the present invention;
Fig. 8 is a flow chart showing a control procedure of the radio base station, according to the second embodiment of the present invention;
Fig. 9 is a flow chart showing a control procedure of the machine radio station, according to the second embodiment of the present invention;
Fig. 10 is a flow chart showing a control procedure of the machine radio station on an upper layer, according to the second embodiment of the present invention; and
Fig. 11 is a block diagram showing the structure of a radio communication system according to a third embodiment of the present invention.

### DESCRIPTION OF THE PREFERRED EMBODIMENTS

Embodiments of the present invention will now be described by way of example with reference to the drawings. However, the structural elements that are described in the following embodiments are only cited as examples; the technical scope of the present invention is not to be considered as being limited only to those elements.

### The first embodiment

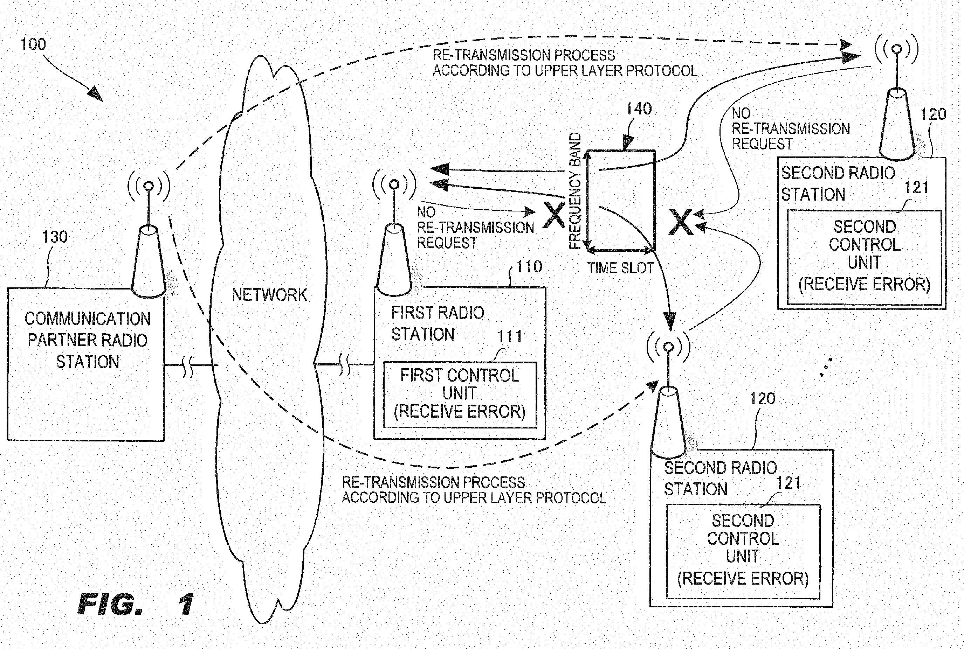

A radio system 100 will now be explained with reference to Fig. 1, as the first embodiment of the present invention. The radio communication system 100 is a system that performs communication by using a radio resource that is limited.

As shown in Fig. 1, the radio communication system 10 includes a first radio station 110 that communicates via the abovementioned limited radio resource 140 that has been allocated in advance and that includes limited time slots and a limited frequency band, and a plurality of second radio stations 120. The first radio station 110 comprises a first control unit 111 that performs control so that, if a receive error has been detected in the data transmitted from the plurality of second radio stations 120 to the first radio station 110, the plurality of second radio stations 120 are not requested to perform re-transmission. And each of the plurality of second radio stations 120 comprises a second control unit 121 that performs control so that, if a receive error has been detected in the data transmitted from the first radio station 110 to that second radio station 120, no request for re-transmission is issued to the first radio station 110, but instead the transmission data in which the receive error has occurred is re-transmitted according to a upper layer protocol by a communication partner radio station 130 with which communication is already established on an upper layer.

According to this embodiment, along with limiting the radio resources that are allocated to the second radio stations, it is possible to simplify the data processing in the first radio station for maintaining the relationships with the second radio stations to the greatest possible extent, so that it is possible to reduce the load upon the first radio station due to increase in the number of the second radio stations.

### The second embodiment

The second embodiment of the present invention is a radio communication system in which a large number of machine radio stations that perform machine to machine communication (M2M) are present within a cell controlled by a radio base station, along with mobile radio stations (including mobile telephones). And, while it is possible for radio resources that are allocated to the system to be used by the mobile radio stations without any limitation, a portion of the limited radio resources are allocated to the machine radio stations in a dedicated manner, while avoiding influence upon the mobile radio stations. In order for a portion of the limited radio resources to be shared by the large number of machine radio stations, the data processing in the radio base station is simplified to the greatest possible extent. According to this embodiment, no scheduling such as is performed for communication with the mobile radio stations is performed in the radio base station for the amounts of data transmitted to the machine radio stations and the timings of transmission, or for the amounts of data received from the machine radio stations and the timings of reception or the like. Accordingly, it becomes possible to alleviate the load upon the radio base station entailed by the increase in the number of machine radio stations.

### Structure of the radio communication system of this embodiment

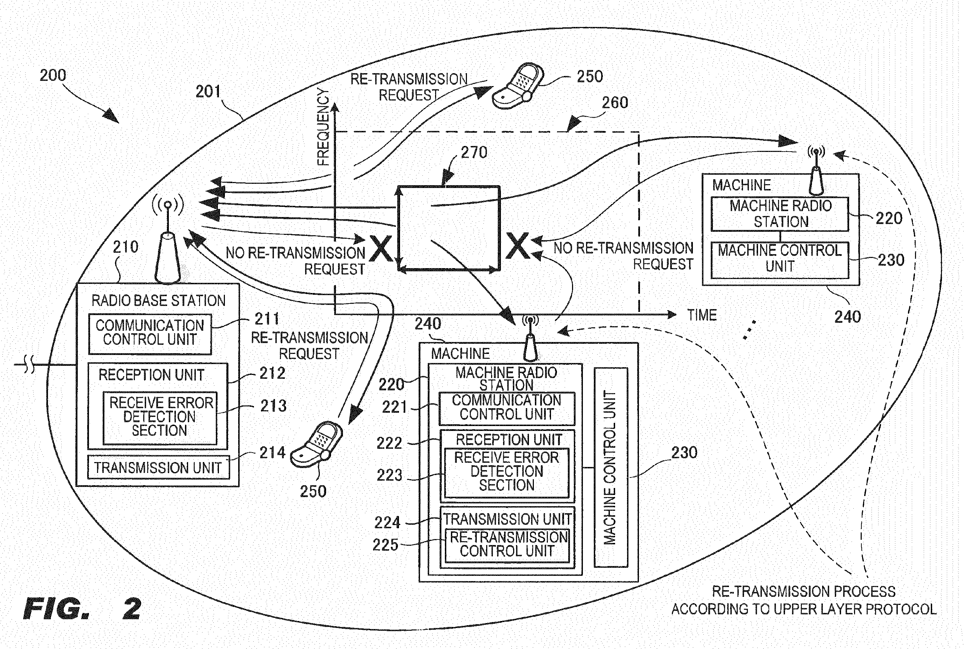

Fig. 2 is a block diagram showing the structure of a radio communication system 200 of this embodiment. It should be understood that the partner radio station with which the machine radio station communicates is not shown in Fig. 2. In Fig. 2, the structure within a cell that is controlled by the radio base station that is the main structure of this embodiment is shown. Moreover, while in this embodiment the LTE method is explained as a precondition, the same problems appear with other methods as well, and accordingly the present invention is not limited to the LTE method.

Numeral 201 in Fig. 2 denotes a cell that indicates the area controlled by a radio base station 210. The radio base station 210, along with controlling communication between radio stations within the cell 201 (including machine radio stations 220 and mobile radio stations 250), also includes a communication control unit 211 that controls communication with a upper level node. Moreover, the radio base station 210 is provided with a reception unit 212 that controls the reception of data and that includes a receive error detection unit 213 that detects receive errors from the data received from the radio stations in the cell 201. Furthermore, the radio base station 210 is provided with a transmission unit 214 that controls transmission of data to the radio stations in the cell 201.

A representative one of the machine radio stations 220 that communicate with the radio base station 210 is connected to a machine control unit 230 that controls the operation of a machine 240, and, along with receiving information for machine control from the radio base station 210, also transmits the machine status to a upper level device (not shown in the figures) via the radio base station 210. The machine radio station 220 comprises a communication control unit 221 that controls communication with the radio base station 210. Moreover, the machine radio station is provided with a reception unit 222 that controls the reception of data and that includes a receive error detection unit 223 that detects receive errors from the received data received from the radio base station 210. Yet further, the machine radio station is provided with a transmission unit 224 that controls transmission of data to the radio base station 210, and that includes a re-transmission control unit 225 for re-transmitting data to the radio base station 210. The mobile radio stations 250 may include mobile telephones and/or mobile stations of other types.

A numeral 260 denotes an overall radio resource having a frequency band and time slot that the radio base station 210 can employ for communication. And a numeral 270 denotes a limited frequency band and time slot, from among the overall radio resource 260, that are allocated to the machine radio stations 220. All of the machine radio stations 220 within the cell 201 perform transmission and reception of data by employing this limited radio resource 270. On the other hand, for transmitting and receiving telephone conversations and data, the mobile radio stations 250 employ the entire radio resource 260 that the radio base station 210 is capable of using for communication.

In Fig. 2, the fact that no re-transmission request has been made in transmission and reception by the machine radio stations 220 that employ the limited radio resource 270 is shown by the bold letters "X". Moreover, data re-transmitting on an upper layer according to a upper layer protocol between the machine radio stations 220 and the communication partner radio station is shown by the broken lines.

### Radio resources allocated to the machine radio stations

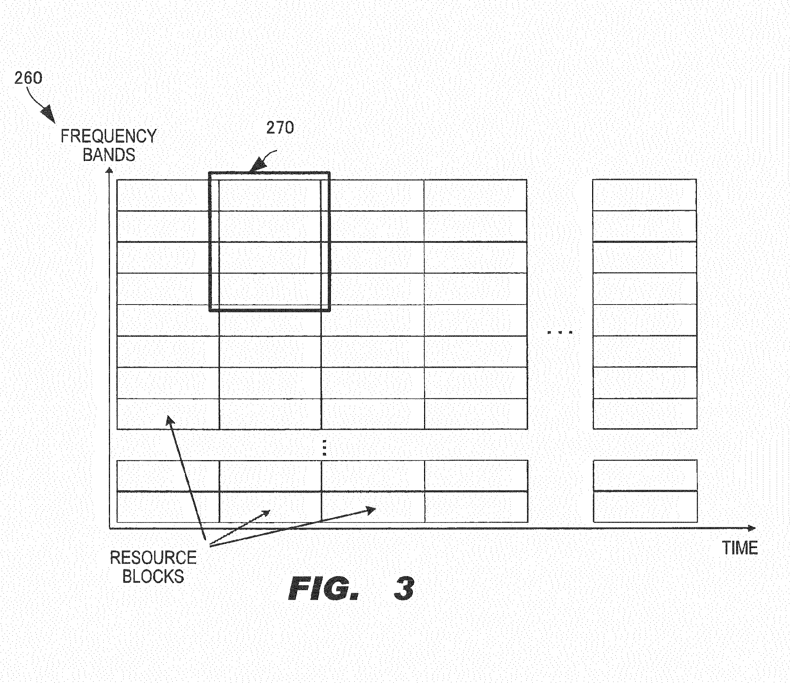

Fig. 3 is a figure for explanation of resource block allocation according to this embodiment.

As shown in Fig. 3, the radio resource that can be employed by the radio base station 210 is divided into resource blocks that have a fixed frequency width and a fixed time width. As shown in Fig. 3, the radio resource 270 allocated to the machine radio stations 220 is reserved by the radio base station 210 including a predetermined number of resource blocks therein, and it is ensured that these are not employed for general use by the mobile radio stations 250. Any of the machine radio stations 220 operates to perform communication with the radio base station 210 by employing this reserved radio resource 270 that has been allocated. For this, the radio base station 210 notifies the range of this radio resource 270 to all of the machine radio stations 220 within this cell. Thereafter, the allocated radio resource 270 is only employed in communication between the radio base station 210 and the machine radio stations 220.

### Data transmission processing from the radio base station to the machine radio stations

The processing in this embodiment by the radio communication system 200 of Fig. 2 for transmission of data from the radio base station 210 to one of the machine radio stations 220 will now be explained.

### Transition diagram

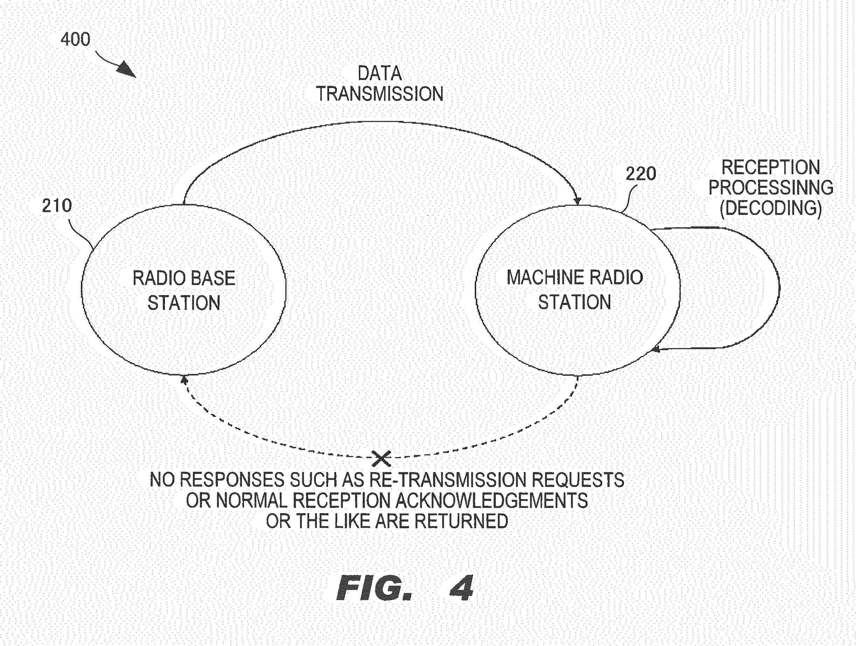

Fig. 4 is a transition diagram showing a transition 400 in data transmission processing from the radio base station 210 to the machine radio station 220.

The radio base station 210 attaches to the data to be transmitted the identifier (ID) of the machine radio station 220 that is to be the recipient (i.e. a destination address), and transmits the data. The machine radio station 220 monitors the radio resource 270 that has been allocated, and, if the machine radio station 220 has received data to which its own identifier (ID) appended, then the machine radio station 220 implements decoding of this data. At this time, the machine radio station 220 does not return any response message for acknowledgment (an ACK or a NACK) to signify reception of the data, neither if the machine radio station 220 has been able to receive (decode) this data correctly, nor if the machine radio station 220 has not been able to perform reception (decoding) correctly.

Due to this, in the radio base station 210, it becomes possible to omit processing for waiting for a response message for acknowledgement from the machine radio station 220, and to omit processing for transmitting re-transmission data corresponding to the contents of such a response message for acknowledgement. When the data transmitted from the radio base station 210 cannot be correctly received (i.e. decoded) by the machine radio station, the re-transmission process may be implemented by TCP or the like, a upper layer protocol on the upper layer, in which the radio base station 210 does not directly participate. It should be understood that the upper layer protocol on a upper layer is not limited to being TCP; any protocol will be acceptable, provided that the radio base station 210 does not directly participate.

### Sequence diagram

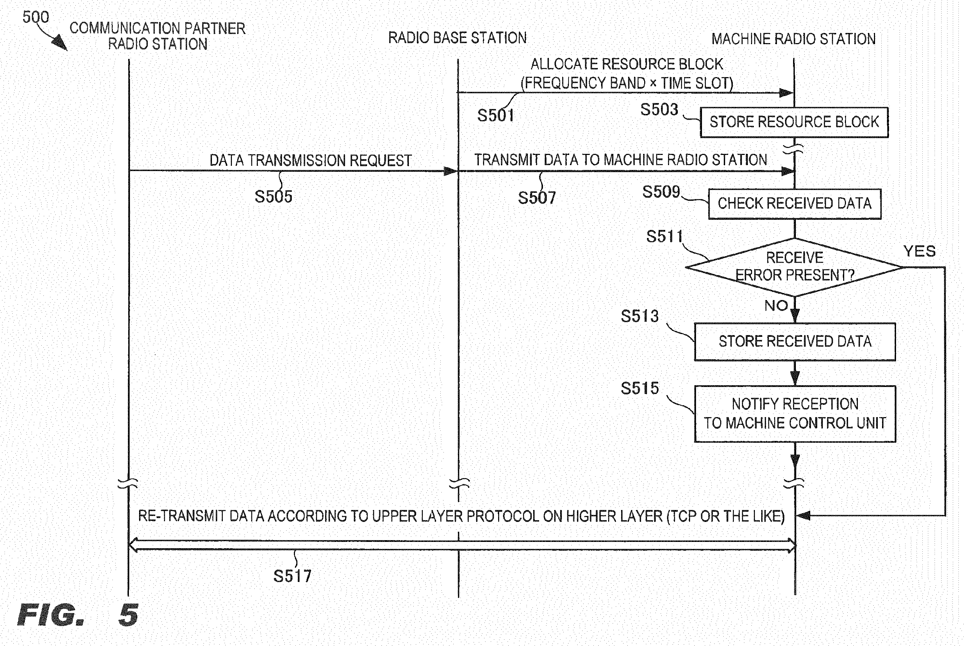

Fig. 5 is a sequence diagram showing a sequence 500 of data transmission from the radio base station 210 to the machine radio station 220.

First, in a step S501, the radio base station 210 allocates a radio resource consisting of a resource block in Fig. 3 to the machine radio station 220. Then in a step S503 the machine radio station 220 stores this resource block which it can use.

Thereafter a communication establishment procedure (not shown in the figure) is performed between the machine radio station 220 and the communication partner radio station, and, when in a step S505 a request for data transmission arrives from the communication partner radio station, in a step S507 the radio base station 210 transmits this data to the machine radio station 220. And in a step S509 the machine radio station 220 performs checking of the received data. Then in a step S511 a determination is made as to whether or not a receive error is present. If there is no receive error then the flow of control proceeds to a step S513, in which the received data is stored. And in a step S515 the fact that data has been received is notified to the machine control unit 230.

On the other hand, even if there is a receive error, no re-transmission request is issued to the radio base station 210. Thereafter, in a step S517, re-transmitting of the data is implemented according to a upper layer protocol on a upper layer. This re-transmitting may also be performed if, even though a request has been made from the machine radio station 220 to the communication partner, the communication partner waits for a notification of normal reception from the machine radio station 220 and no notification of normal reception arrives. In this embodiment, this re-transmitting procedure according to a upper layer protocol is not particularly limited.

### Data transmission processing from the machine radio station to the radio base station

In the radio communication system 200 of Fig. 2, the processing for data transmission from the machine radio station 220 of this embodiment to the radio base station 210 will now be explained.

### Transition diagram

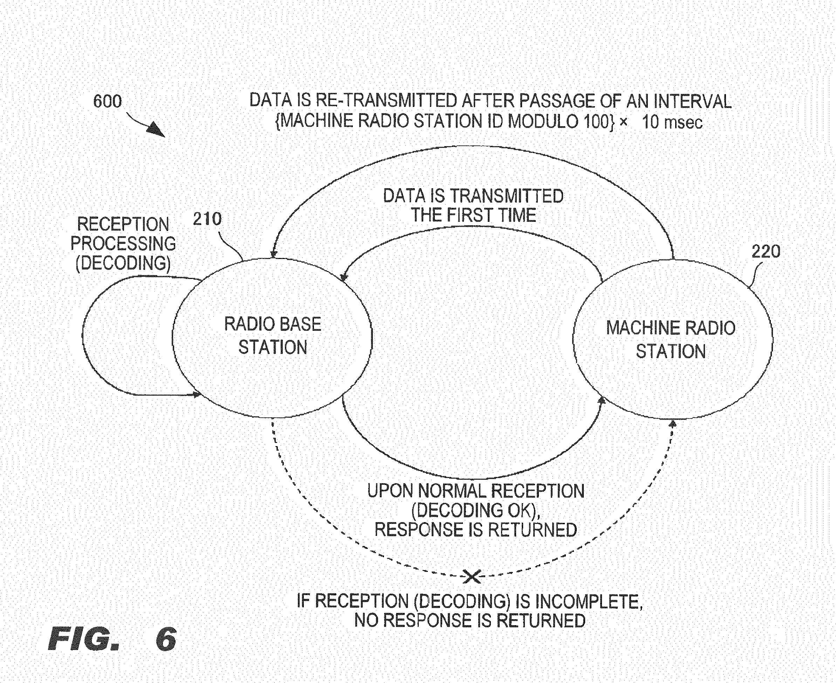

Fig. 6 is a transition diagram showing a transition 600 for data transmission from the machine radio station 220 to the radio base station 210.

The machine radio station 220 transmits data to which its own identifier (ID) is attached, employing the radio resource 270 that has been allocated in advance by the notification information. In this case there is a possibility of occurrence of a data collision when a plurality of the machine radio stations 220 transmit data at the same timing and the transmitted data is received by the radio base station 210. If the radio base station 210 has been correctly received (i.e. decoded) data from a machine radiostation via the above radio resource 270, then the radio base station 210 notifies an acknowledgement message (i.e. an ACK) to signify completion of normal reception, with appending the identifier (ID) of the machine radio station 220 that was attached to the receiced data. And, upon reception of this completion of normal reception message (i.e. the ACK), the machine radio station 220 determines that data transmission has been completed, and then changes over to the next data transmission and reception stage.

On the other hand, if the radio base station 210 has not been correctly received (i.e. decoded) data from a machine radio station 220 via the above radio resource 270, then the radio base station 210 does not perform any notification to the machine radio station 220 of any message for requesting data re-transmitting or the like. In this case, on the side of the machine radio station 220, it is monitored whether completion of normal reception (i.e. an ACK) has been notified by the radio base station 210 within a predetermined period (some tens of ms to around a hundred ms) after data transmission of the machine radio station 220. If no completion of normal reception (ACK) has been notified within the predetermined period, then the machine radio station 220 decides that normal reception by the radio base station 210 has not been complete, and changes over to a data re-transmission process. At this time, data is re-transmitted to the radio base station 210 by each of the machine radio stations 220 after passage of an interval of length {(its own identification ID modulo 100) x10} msec. Due to this, the re-transmitting timings of the various machine radio stations 220 deviate from each other, so that it is possible to avoid collision of the re-transmission data, by preventing all of the machine radio stations 220 that has occurred a data collision from re-transmitting the same data at the same timing again.

### Sequence diagram

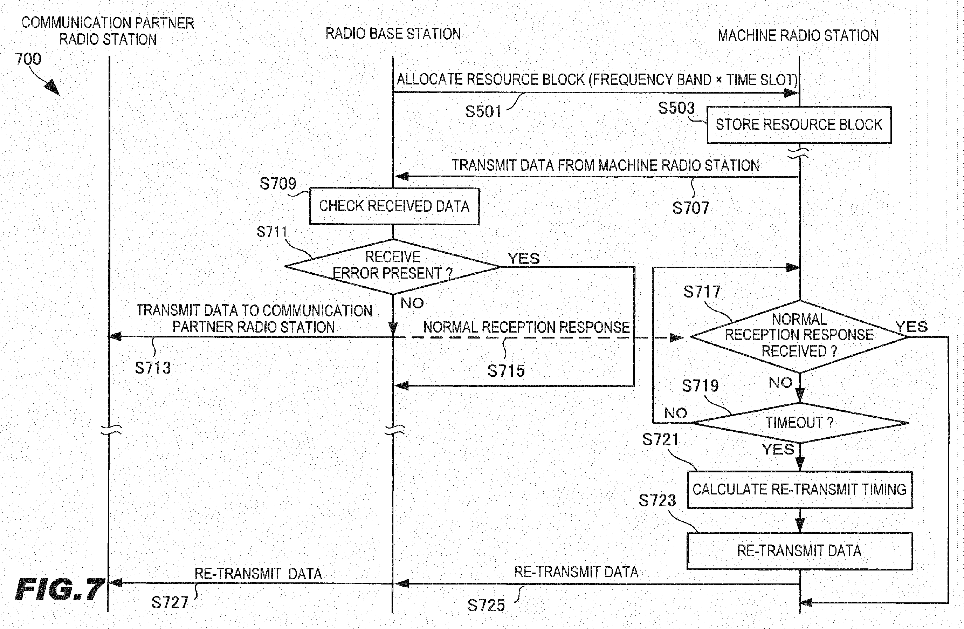

Fig. 7 is a sequence diagram showing a sequence 700 for data transmission from the machine radio station 220 to the radio base station 210.

First, in a similar manner to the case in Fig. 5, in a step S501, the radio base station 210 allocates a radio resource that consists of a resource block of Fig. 3 to the machine radio station 220. And in a step S503 the machine radio station 220 stores the resource block which it can use.

Thereafter a communication establishment procedure (not shown in the figure) is performed between the machine radio station 220 and the communication partner radio station. And when in a step S707 a request for data transmission from the machine radio station 220 to the communication partner radio station arrives at the radio base station 210, in a step S709 the radio base station 210 performs checking of the received data. Then in a step S711 a determination is made as to whether or not a receive error is present. If there is no receive error then the flow of control proceeds to a step S713, in which the data is transmitted to the communication partner radio station. Moreover, in a step S715, a response of normal reception (i.e. an ACK) is returned to the machine radio station 220.

In a step S717 a response of normal reception (ACK) from the radio base station 210 is awaited by the machine radio station 220, and in a step S719 a time period after data transmission (some tens of ms to around a hundred ms) is measured in which there is no response of normal reception. If there is a response of normal reception in the step S717, then this transmission processing terminates.

On the other hand, if there is no response of normal reception and timeout takes place, then the flow of control proceeds to a step S721, and a re-transmission timing corresponding to each of the machine radio stations 220 is calculated. As described above, the formula for calculation is {(own identification ID modulo 100) × 10} ms, and due to this it becomes possible to avoid collision of data transmission during re-transmitting. It should be understood that this formula for calculation is only one example; the formula used is not particularly limited, provided that it is one that is capable of avoiding data transmission collision during re-transmitting. After waiting for the calculated time periods, in a step S723, the data is re-transmitted from the machine radio stations 220 to the radio base station 210. The transmission data that has been re-transmitted is sent to the radio base station 210 in a step S725, again. And in a step S727 it is sent from the radio base station 210 to the communication partner radio station.

### Structure and operation of the radio base station

### Structure

The functional structure of the radio base station 210 is shown in Fig. 2. While RAM is used as the primary storage region for the data for the various sections of this functional structure, they are implemented by a program that is stored in storage such as disk or the like being executed by a CPU. The radio base station 210 is implemented by hardware structural sections being controlled by these functional structural sections.

### Operation

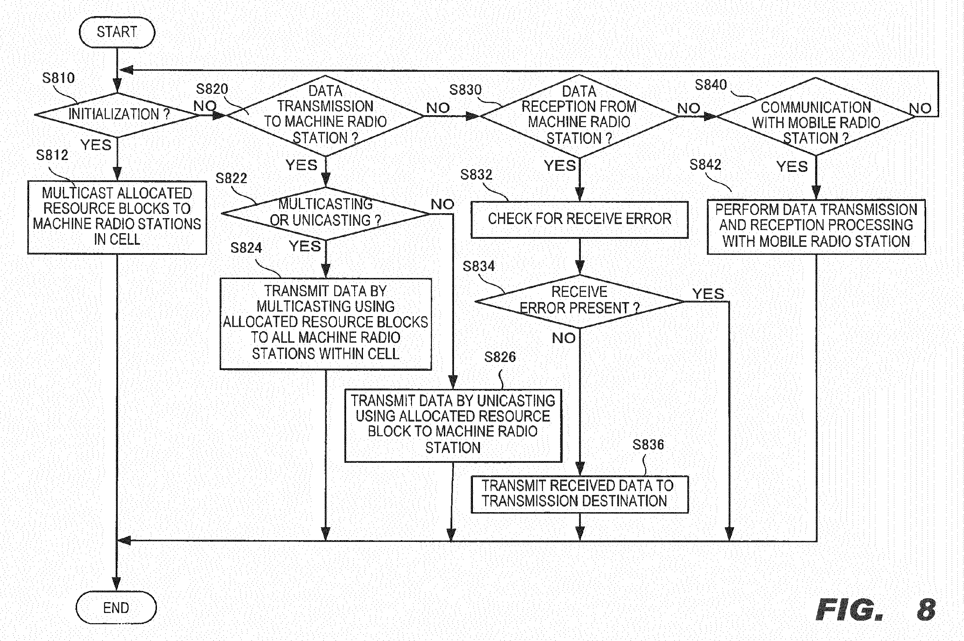

Fig. 8 is a flow chart showing the control procedure for the radio base station 210 according to this embodiment. By being executed by the CPU, this flow chart implements the various functional structural sections of the radio base station 210 of Fig. 2, while using RAM as the primary storage region for the data.

First, in a step S810, a decision is made as to whether or not initialization is to be performed. Initialization includes when the power supply to the radio base station 210 is turned on, or when it is reset or the like. If initialization is to be performed, then the flow of control proceeds to a step S812, and the radio resource 270 consisting of an allocated resource block that has been reserved is multicast to the machine radio stations 220 within the cell. It should be understood that while, here, an example is shown in which multicasting is performed to all of the machine radio stations 220, it would also be acceptable for the machine radio stations 220 to be separated into groups, and for one of the resource blocks to be allocated to each of the groups. In this case, this is multicasting by units of groups.

Then in a step S820 a decision is made as to whether or not data transmission to the machine radio station 220 is to be performed. If data transmission to the machine radio station 220 is to be performed, then the flow of control proceeds to a step S822, and a decision is made as to whether to perform data transmission to all of the machine radio stations 220 in common (i.e., multicasting), or to perform data transmission to a specified one of the machine radio stations 220 (i.e., unicasting). In the case of multicasting, the flow of control proceeds to a step S824, in which the data is transmitted by multicasting, using the resource blocks that have been allocated to all of the machine radio stations 220 within the cell. On the other hand, in the case of unicasting, the flow of control proceeds to a step S826, in which the data is transmitted by unicasting to the specified machine radio station 220, using the resource blocks that have been allocated to all of the machine radio stations 220 within the cell.

In a step S830, a decision is made as to whether or not data has been received from a machine radio station 220. If data has been received from a machine radio station 220, then the flow of control proceeds to a step S832, in which a check is made as to whether there is any receive error in the data that has been received. If there is no receive error, then the flow of control proceeds from a step S834 to a step S836, and the received data is re-transmitted to the transmission destination. On the other hand, if there is a receive error, then nothing is done, and this processing terminates.

Then in a step S840 a decision is made as to whether or not this is a case of communication, not with a machine radio station 220, but with a normal mobile radio station 250. If it is communication with a normal mobile radio station 250 then the flow of control proceeds to a step S842, and data transmission and reception processing with the mobile radio station 250 is performed. Since this data transmission and reception processing with the mobile radio station 250 is not the principal processing of this embodiment, detailed explanation thereof will be omitted.

### Structure and operation of the machine radio stations

### Structure

The functional structure of the machine radio stations 220 is shown in Fig. 2. While RAM is used as the primary storage region for the data for the various sections of this functional structure, they are implemented by a program that is stored in storage such as disk or the like being executed by a CPU. The machine radio stations 220 are implemented by hardware structural sections being controlled by these functional structural sections.

### Operation on the lower layer

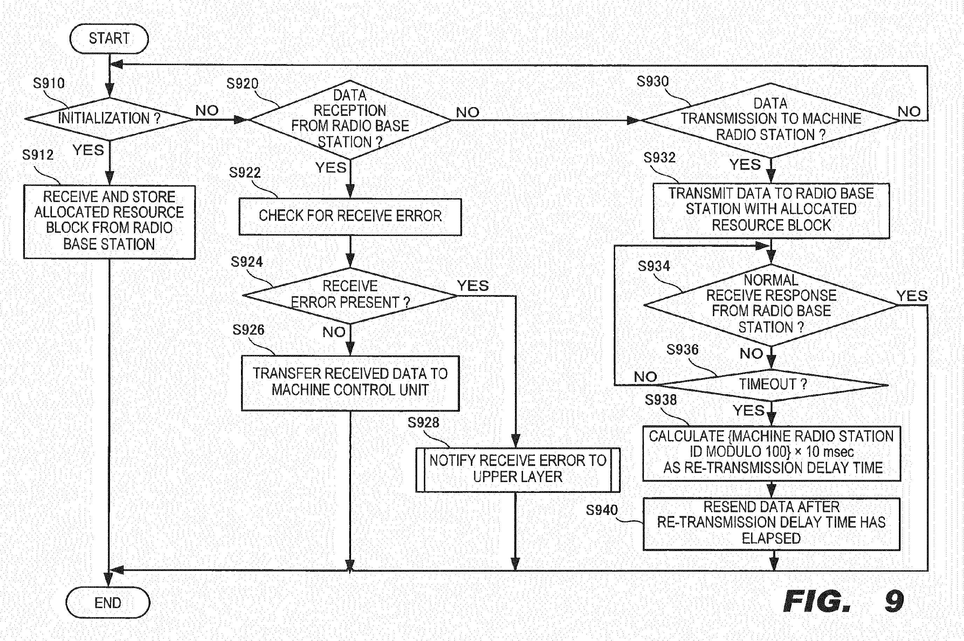

Fig. 9 is a flow chart showing the control procedure for the machine radio station 220 according to this embodiment on the lower layer. By being executed by the CPU, and while using RAM as the primary storage region for the data, this flow chart implements the various functional structural sections of the machine radio station 220 of Fig. 2.

First, in a step S910, a decision is made as to whether or not initialization is to be performed. Initialization includes when the power supply to the machine radio station 220 is turned on, or when it is reset or the like. If initialization is to be performed, then the flow of control proceeds to a step S912, and the radio resource 270 consisting of an allocated resource block that has been allocated from the radio base station 210 is received and is stored for transmission and reception.

Then in a step S920 a decision is made as to whether or not data has been received from the radio base station 210. If data has been received from the radio base station 210, then the flow of control proceeds to a step S922, in which a check is made for a receive error in the data that has been received. If there is no receive error, then the flow of control proceeds from the step S924 to a step S926, in which the received data is transferred to the machine control unit 230. On the other hand, if there is a receive error, then processing such as issuing a re-transmission request to the radio base station 210 or the like is absolutely not performed, but rather the receive error is merely notified to the upper layer in a step S928, and then this processing terminates.

In a step S930, a decision is made as to whether or not there has been data transmission to the radio base station 210. If there has been data transmission to the radio base station 210, then the flow of control proceeds to a step S932, and, simultaneously with performing data transmission to the radio base station 210 by using the allocated resource block, a timer (not shown in the figures) for measuring a timeout is started. Then in a step S934 a response of normal reception (ACK) is awaited from the radio base station 210, and in a step S936 the timeout over which there has been no response of normal reception (ACK) is measured. If there is a response of normal reception (ACK), then this processing terminates. On the other hand, if there is no response of normal reception (ACK) and timeout occurs, then the flow of control proceeds to a step S938, and the re-transmission delay time period is calculated with the formula described above of {own identification ID modulo 100} × 10 ms. And in a step S940 the data is re-transmitted to the radio base station 210 after the re-transmission delay time period has expired.

### Operation on the upper layer

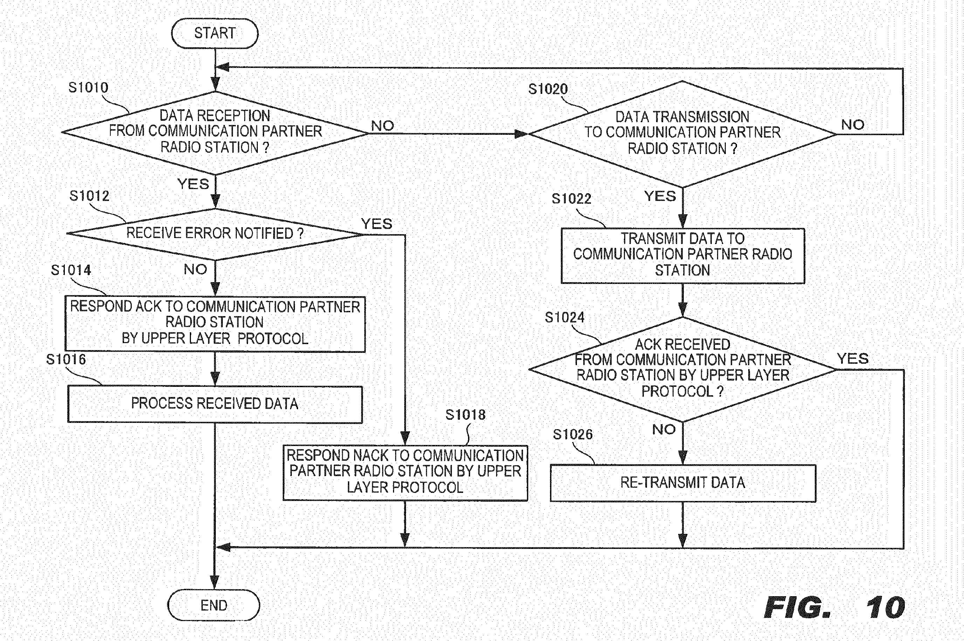

Fig. 10 is a flow chart showing the control procedure for the machine radio station 220 according to this embodiment on the upper layer. By being executed by the CPU, and while using RAM as the primary storage region for the data, this flow chart implements the various functional structural sections of the machine radio station 220 of Fig. 2, and in particular implements transmission and reception processing with the communication partner radio station on the upper layer.

First, in a step S1010, a decision is made as to whether or not data has been received from the communication partner radio station. If data has been received from the communication partner radio station, then the flow of control proceeds to a step S1020, in which a notification from the lower layer as to whether or not there has been a receive error in the received data is awaited. If notification of normal reception arrives from the lower layer (i.e. if there is no receive error), then the flow of control proceeds to a step S1014, in which normal reception (ACK) is responded to the communication partner radio station according to a upper layer protocol. Then in a step S1016 processing of the received data is performed. On the other hand, if notification of a receive error arrives from the lower layer, then the flow of control is transferred to a step S1018, in which a receive error (NACK) is responded to the communication partner radio station according to the upper layer protocol. It should be understood that, according to the upper layer protocol, it would also be possible not to respond with a receive error (NACK) but instead to perform re-transmitting upon a timeout from the communication partner radio station.

In the step S1020, a decision is made as to whether or not there is data to be transmitted to the communication partner radio station. If there is data to be transmitted to the communication partner radio station, then the flow of control proceeds to a step S1022, and transmission of the data to the communication partner radio station is performed. Next, in a step S1024, a response of normal reception (i.e. an ACK) is awaited from the communication partner radio station. If a response of normal reception (ACK) is received, then processing terminates. On the other hand, if a receive error response (i.e. a NACK) is received (that is, if there is no response of normal reception), then the flow of control proceeds to a step S1026, in which the data is re-transmitted to the communication partner radio station. It should be understood that it would also be acceptable to arrange for this re-transmitting of data not to be performed upon a receive error response (i.e. a NACK), but when a decision of timeout is made.

### The third embodiment

In the second embodiment, the radio communication system of the present invention has been explained with principal emphasis being given to communication between the radio base station and the machine radio stations. However, in this embodiment, a radio communication system will be explained that includes a data server that gathers information from a large number of machine radio stations, and that controls the large number of machine radio stations on the basis of this information that has been gathered. According to this embodiment, it is possible to control a large number of machines in an appropriate manner while employing a radio resource that is limited, and while reducing the load upon the radio base stations.

### Structure of the radio communication system according to this embodiment

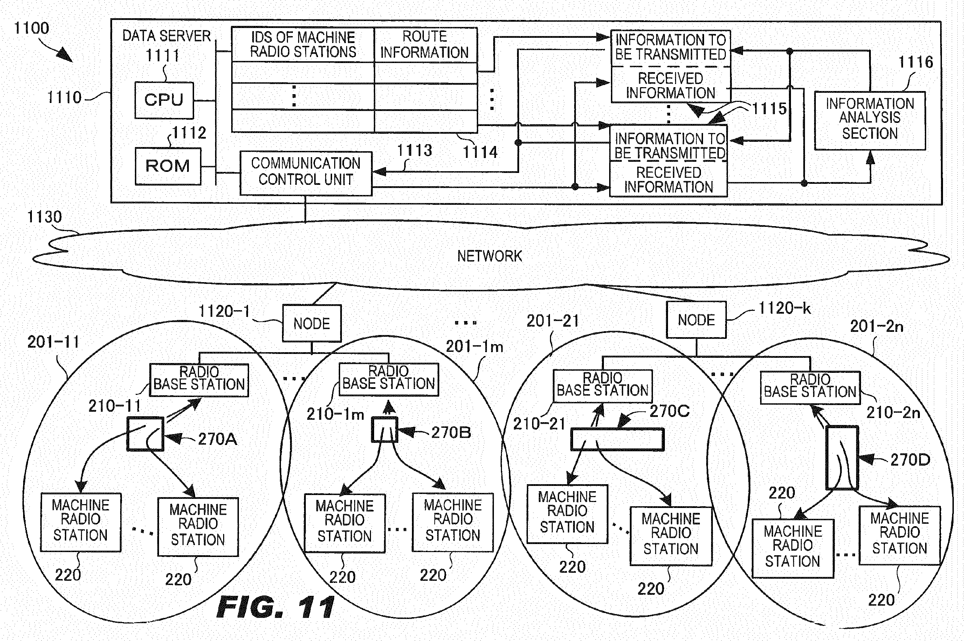

Fig. 11 is a block diagram showing the structure of a radio communication system 1100 according to this embodiment.

Fig. 11 is a figure showing the radio communication system 1100, which includes a large number of machine radio stations 220 of a plurality of cells 201-11 through 201-1m and 201-21 through 201-2m that are controlled by a plurality of radio base stations 210-11 through 210-1m and 210-21 through 210-2n. And the radio communication system 1100 includes a data server 1100 that gathers and analyzes information from this large number of machine radio stations 220 via nodes 1120-1 through 1120-k and a network 1130, and that performs control of the large number of machine radio stations 220. Four among the cells are shown in the figure as representative, and radio resources 270A through 270D are shown that consist of the resource blocks allocated to the respective machine radio stations 220. Since the structure and the operation of the various structural elements shown below the network 1130 will be clear from the embodiments described above, the structure and operation of the data server 1110 will be explained here.

### Structure of the data server

The data server 1110 comprises a CPU 1111 that handles processing for the entire server, and a ROM 1112 in which fixed data and programs are stored. Moreover, the data server comprises a communication control unit 1113 that controls communication via the network 1130. Furthermore, the data server 1110 includes a table 1114 that stores communication routes to the machine radio stations 220, in correspondence with the IDs of the machine radio stations that are the subjects of information gathering and control by the data server. And the information to be transmitted and the received information 1115 that are transmitted and received by the communication control unit 1113 are accumulated in correspondence with the IDs of the machine radio stations. In this information to be transmitted and received information 1115, the information received from the machine radio stations 220 is analyzed by the information analysis section 1116, and information to be transmitted for controlling the machine radio stations 220 is generated from the results of this analysis. It should be understood that, while this information analysis is not a particular characteristic of this embodiment, it would be possible, for example, to construct a histogram from information from a machine radio station 220 that is an automatic vending machine, and to alter the control of a machine control unit 230 according to the trend of sales. Alternatively, notification of information corresponding to information from a machine radio station 220 of a sensor, or change of a program or the like, would also be possible.

### [Other Embodiments]

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions. The present invention also incorporates a system or apparatus that somehow combines different features included in the respective embodiments.

The present invention is applicable to a system including a plurality of devices or a single apparatus. The present invention is also applicable even when a control program for implementing the functions of the embodiments is supplied to the system or apparatus directly or from a remote site. Hence, the present invention also incorporates the control program installed in a computer to implement the functions of the present invention on the computer, a medium storing the control program, and a WWW (World Wide Web) server that causes a user to download the control program.

### [Other descriptions of the Embodiments]

A part or all of the above mentioned embodiments may be also described such as the below Appendixes. However, the present embodiments should not be limited within the descriptions of the Appendixes.

### (Appendix 1)

A radio communication system that performs communication using a limited radio resource, comprising a first radio station and a plurality of second radio stations that communicate via said limited radio resource having a limited time slot and a limited frequency band allocated in advance,
the first radio station comprising a first control unit that performs control not to request the plurality of second radio stations to re-transmit transmission data when detecting a receive error in the transmission data from the plurality of second radio stations to the first radio station, and
each of the plurality of second radio stations comprising a second control unit that performs control, when detecting a receive error in transmission data from the first radio station to the second radio station, not to request the first radio station to re-transmit the transmission data in which the receive error has been detected, but to receive the transmission data re-transmitted according to a upper layer protocol from a communication partner radio station with which communication on the upper layer has already been established.

### (Appendix 2)

A radio communication system according to Appendix 1, wherein said first control unit transmits an acknowledgement message to the second radio station when correctly receiving the transmission data from the second radio station to the first radio station, and,
said second control unit re-transmits the transmission data when receiving no acknowledgement message within a predetermined period in data transmission from the second radio station to the first radio station.

### (Appendix 3)

A radio communication system according to Appendix 1 or 2, wherein the first radio station is a radio base station, and the second radio station is a radio station whose communication is controlled by said radio base station.

### (Appendix 4)

A radio communication system according to any one of Appendixes 1 to 3, wherein said communication includes machine to machine communication (M2M).

### (Appendix 5)

A radio communication system according to any one of Appendixes1 to 4, comprising a plurality of groups each group including the first radio station and a plurality of the second radio stations; and
a data server that, via the plurality of first radio stations, gathers the transmission data transmitted from the plurality of second radio stations in the plurality of groups and controls the plurality of second radio stations.

### (Appendix 6)

A radio communication method of communicating a first radio station and a second radio station using a limited radio resource, comprising:
the first radio station transmitting an acknowledgement message to the second radio station when correctly receiving transmission data from the second radio station to the first radio station;
the first radio station not requesting the second radio station to re-transmit the transmission data, when detecting a receive error in the transmission data from the second radio station to the first radio station;
the second radio station re-transmitting the transmission data to the first radio station when receiving no acknowledgement message from first radio station within a predetermined period in data transmission from the second radio station to the first radio station; and
the second radio station not requesting the first radio station to re-transmit transmission data in which the receive error has been detected, even if when detecting a receive error in the transmission data from the first radio station to the second radio station, but receiving the transmission data re-transmitted according to a upper layer protocol from a communication partner radio station with which communication on the upper layer has already been established.

### (Appendix 7)

A radio communication device that performs communication using a limited radio resource with being controlled by a radio base station, said device comprising:
a transmission unit that re-transmits transmission data when receiving no acknowledgement message from the radio base station within a predetermined period, the acknowledgement message confirming that the transmission data has been correctly received by said radio base station, in data transmission to the radio base station;
a detection unit that detects a receive error in data received from the radio base station; and
a reception unit that performs control, , when a receive error has been detected by said detection means, not to request the radio base station to re-transmit the data in which the receive error detected, but to receive the data in which the receive error detected re-transmitted according to a upper layer protocol from a communication partner radio station with which communication on the upper layer has already been established.

### (Appendix 8)

A method of controlling a radio communication device that performs communication using a limited radio resource with being controlled by a radio base station, said method comprising:
re-transmitting transmission data when receiving no acknowledgement message from the radio base station within a predetermined period, the acknowledgement message confirming that the transmission data has been correctly received by said radio base station, in data transmission to the radio base station;
detecting a receive error in data received from the radio base station; and
performing control, when a receive error has been detected by said detection means, not to request the radio base station to re-transmit the data in which the receive error detected, but to receive the data in which the receive error detected re-transmitted according to a upper layer protocol from a communication partner radio station with which communication on the upper layer has already been established.

### (Appendix 9)

A storage medium that stores a program for controlling a radio communication device that performs communication using a limited radio resource with being controlled by a radio base station, said program that causes a computer to execute the step of:
re-transmitting transmission data when receiving no acknowledgement message from the radio base station within a predetermined period, the acknowledgement message confirming that the transmission data has been correctly received by said radio base station, in data transmission to the radio base station;
detecting a receive error in data received from the radio base station; and
performing control, when a receive error has been detected by said detection means, not to request the radio base station to re-transmit the data in which the receive error detected, but to receive the data in which the receive error detected re-transmitted according to a upper layer protocol from a communication partner radio station with which communication on the upper layer has already been established.

This application claims the benefit of Japanese Patent Application No. 2011-023755 filed on February 7, 2011, which is hereby incorporated by reference herein in its entirety.

## Claims

1. A radio communication system that performs communication using a limited radio resource, comprising a first radio station and a plurality of second radio stations that communicate via said limited radio resource having a limited time slot and a limited frequency band allocated in advance,
the first radio station comprising a first control unit that performs control not to request the plurality of second radio stations to re-transmit transmission data when detecting a receive error in the transmission data from the plurality of second radio stations to the first radio station, and
each of the plurality of second radio stations comprising a second control unit that performs control, when detecting a receive error in transmission data from the first radio station to the second radio station, not to request the first radio station to re-transmit the transmission data in which the receive error has been detected, but to receive the transmission data re-transmitted according to a upper layer protocol from a communication partner radio station with which communication on the upper layer has already been established.

2. A radio communication system according to Claim 1, wherein said first control unit transmits an acknowledgement message to the second radio station when correctly receiving the transmission data from the second radio station to the first radio station, and,
said second control unit re-transmits the transmission data when receiving no acknowledgement message within a predetermined period in data transmission from the second radio station to the first radio station.

3. A radio communication system according to Claim 1 or 2, wherein the first radio station is a radio base station, and the second radio station is a radio station whose communication is controlled by said radio base station.

4. A radio communication system according to any one of Claims 1 to 3, wherein said communication includes machine to machine communication (M2M).

5. A radio communication system according to any one of Claims 1 to 4, comprising a plurality of groups each group including the first radio station and a plurality of the second radio stations; and
a data server that, via the plurality of first radio stations, gathers the transmission data transmitted from the plurality of second radio stations in the plurality of groups and controls the plurality of second radio stations.

6. A radio communication method of communicating a first radio station and a second radio station using a limited radio resource, comprising:
the first radio station transmitting an acknowledgement message to the second radio station when correctly receiving transmission data from the second radio station to the first radio station;
the first radio station not requesting the second radio station to re-transmit the transmission data, when detecting a receive error in the transmission data from the second radio station to the first radio station;
the second radio station re-transmitting the transmission data to the first radio station when receiving no acknowledgement message from first radio station within a predetermined period in data transmission from the second radio station to the first radio station; and
the second radio station not requesting the first radio station to re-transmit transmission data in which the receive error has been detected, even if when detecting a receive error in the transmission data from the first radio station to the second radio station, but receiving the transmission data re-transmitted according to a upper layer protocol from a communication partner radio station with which communication on the upper layer has already been established.

7. A radio communication device that performs communication using a limited radio resource with being controlled by a radio base station, said device comprising:
a transmission unit that re-transmits transmission data when receiving no acknowledgement message from the radio base station within a predetermined period, the acknowledgement message confirming that the transmission data has been correctly received by said radio base station, in data transmission to the radio base station;
a detection unit that detects a receive error in data received from the radio base station; and
a reception unit that performs control, , when a receive error has been detected by said detection means, not to request the radio base station to re-transmit the data in which the receive error detected, but to receive the data in which the receive error detected re-transmitted according to a upper layer protocol from a communication partner radio station with which communication on the upper layer has already been established.

8. A method of controlling a radio communication device that performs communication using a limited radio resource with being controlled by a radio base station, said method comprising:
re-transmitting transmission data when receiving no acknowledgement message from the radio base station within a predetermined period, the acknowledgement message confirming that the transmission data has been correctly received by said radio base station, in data transmission to the radio base station;
detecting a receive error in data received from the radio base station; and
performing control, when a receive error has been detected by said detection means, not to request the radio base station to re-transmit the data in which the receive error detected, but to receive the data in which the receive error detected re-transmitted according to a upper layer protocol from a communication partner radio station with which communication on the upper layer has already been established.

9. A storage medium that stores a program for controlling a radio communication device that performs communication using a limited radio resource with being controlled by a radio base station, said program that causes a computer to execute the step of:
re-transmitting transmission data when receiving no acknowledgement message from the radio base station within a predetermined period, the acknowledgement message confirming that the transmission data has been correctly received by said radio base station, in data transmission to the radio base station;
detecting a receive error in data received from the radio base station; and
performing control, when a receive error has been detected by said detection means, not to request the radio base station to re-transmit the data in which the receive error detected, but to receive the data in which the receive error detected re-transmitted according to a upper layer protocol from a communication partner radio station with which communication on the upper layer has already been established.
